Europäisches Patentamt

European Patent Office

Office européen des brevets

(19)

(11) Publication number: **0 201 119**

**A1**

## EUROPEAN PATENT APPLICATION

(21) Application number: 86200643.4

(51) Int. Cl.4: **A61C 5/02**

(22) Date of filing: 16.04.86

(30) Priority: 18.04.85 IT 2039685

(43) Date of publication of application:
17.12.86 Bulletin 86/46

(84) Designated Contracting States:
AT BE CH DE FR GB LI LU NL SE

(71) Applicant: **FARO FABBRICA APPARECCHIATURE RAZIONALI ODONTOIATRICHE S.p.A.**
**Via Faro**
**I-20060 Ornago Milano(IT)**

(72) Inventor: **Sandhaus, Sami**
**Avenue du Closelet, 2**
**CH-1006 Lausanne(CH)**

(74) Representative: **Martegani, Franco et al**
**Ingg. GUZZI e RAVIZZA S.r.l. Via Boccaccio, 24**
**I-20123 Milano(IT)**

(54) **Apparatus for performing root canal therapy in dentistry.**

(57) An apparatus for treating root canals in teeth comprising means for sending a treatment liquid under low pressure into said canals and means for aspirating off the detritus resulting from the treatment from said canal when the said treatment liquid has been evacuated from the root canal.

EP 0 201 119 A1

## "APPARATUS FOR PERFORMING ROOT CANAL THERAPY IN DENTISTRY"

The present invention relates to an apparatus for performing root canal therapy in dentistry.

The use of special instruments has long been known in dentistry for effecting root canal therapy, but mechanical intervention with the known instruments entails several serious drawbacks.

For the use of these instruments involves a mechanical action on the affected part, such action providing for the opening and cleaning of the root canal so as to be able to devitalize the tooth by mechanically removing the pulp.

This method of operating generally calls for several visits to the dentist, and the operations in questions must be carried out only by highly qualified and skilled personnel if it is wished to obtain wholly satisfactory devitalization and also, if required, the elimination of infectious foci, granulomas, etc.

Lastly, with the traditional method described the operation on the root canal takes a considerable time (often 1 to 2 hours).

The overall object of the present invention is to obviate the drawbacks of the known art by embodying an apparatus with which a totally aseptic therapy can be given during a single visit to the dentist lasting a few minutes only, and without the use of mechanical instruments for removing the pulp and any infected areas in the treated area.

Moreover, after the preparatory phase (opening of the pulp cavity and insertion of a catheter or the like), the treatment can also be continued by paramedical personnel.

To achieve the said object, the invention according to the present application embodies an apparatus for effecting root canal therapy in dentistry, characterized in that it comprises, in combination: a reservoir adapted to contain a liquid for treating the root canal, first connection means between said reservoir and said root canal and second connection means between said root canal and a discharge, the said reservoir and root canal also being connected respectively to a compressed air source and a vacuum source.

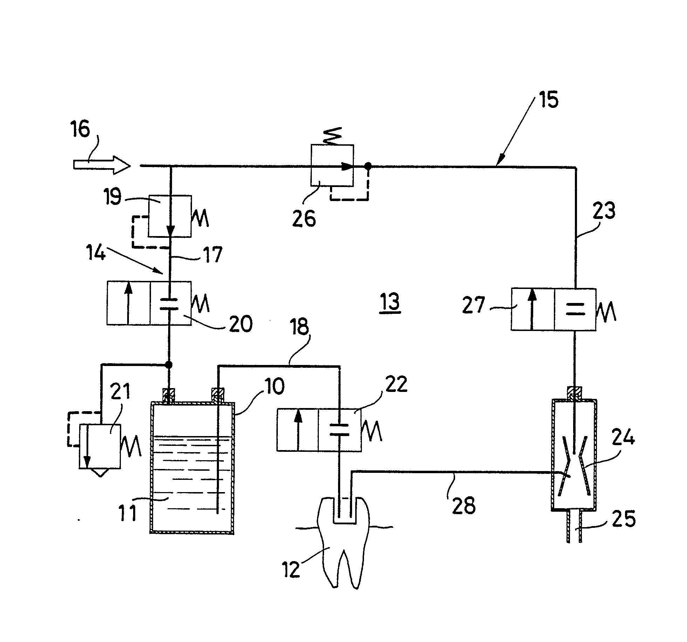

The structural and functional characteristics of the invention, and its advantages over the known art, will become more apparent from an examination of the following description, referred to the appended single drawings which diagrammatically illustrates an example of apparatus embodied to the present invention.

With reference to the drawing, the apparatus in question comprises a reservoir 10 for containing the liquid 11, for example a caustic liquid, adapted to treat a root canal indicated schematically by 12.

The said reservoir 10 is switched into a pneumatic circuit indicated overall by 13 which comprises a first low pressure branch 14 and a second high pressure branch 15, both fed by means of a single compressed air source indicated - schematically by the arrow 16.

The low pressure branch 14 comprises a single section 17 for introducing the air into the reservoir 10, into which reservoir there dips a tube 18 for delivering the liquid 11 into the root canal 12. Along the said section 17 provision is made for, in succession, a first pressure reducer 19, an intake valve 20 and a safety valve 21.

For reasons that will become clear hereinafter, provision is also made for an intake valve 22 along the tube 18 for delivery of the liquid into the root canal 12.

The high pressure branch 15 comprises a section 23 for delivering the air through a Venturi tube 24 terminating downstream in a discharge 25. A second pressure reducer 26 and an intake valve 27 are provided on the section 23.

The apparatus is completed by a conduit 28 which connects the root canal 12 to the outlet of the Venturi tube 24. The dual role of the conduit 28 will be clearly explained hereinafter.

The adjacent ends of the tube 18 and the conduit 28 can also with advantage be incorporated within a catheter or the like for placement within the suitable opened pulp cavity.

The manner of functioning of the apparatus described above is as follows.

With the valve 27 closed and the valves 20 and 22 opened, low pressure air (approximately 0.5 kg/sq. cm.) is fed for a predetermined period of time into the reservoir 10 containing a desired amount of the treatment liquid 11.

It will thus be evident that the liquid 11 is forced through the tube 18 into the root canal 12, from which the said liquid exits through the conduit 28 to be discharged through 25.

The liquid 11 can be introduced into the root canal 12 in a single operation or else at intervals, provided that in each case the said liquid is allowed enough time to bring its softening action to bear on the pulp and dentine.

When this initial therapy of the root canal with the liquid 11 has been completed, the valves 20 and 22 are closed, and the valve 27 is opened and high pressure air (approximately 4 kg/sq. cm.) is sent through the Venturi tube 24. A high vacuum is in consequence set up in the conduit 28, through which the content of the root canal 12 -softened by the prior treatment with the liquid 11 -is aspirated off and discharged through 25. The advantages of the apparatus described above embodied according to the principles of the invention are summarized below.

Firstly, the therapy can be given aseptically, painlessly, during a single visit lasting only a few minutes and in part by paramedical personnel in that the use of known root canal instruments calling for a high degree of expertise and professional skill is done away with.

Secondly, the apparatus of the present invention assures a wholly satisfactory devitalization of the tooth pulp, as also the removal of infectious foci, granulomas, etc.

**Claims**

1) An apparatus for performing root canal therapy in dentistry, characterized in that it comprises, in combination: a reservoir adapted to contain a liquid for treating a root canal, first connection means between the said reservoir and root canal and second connection means between the said root canal and a discharge, the said reservoir and root canal being connected respectively to a compressed air source and a vacuum source.

2) An apparatus as described in claim 1, wherein said first connection means between the reservoir and the root canal consist of a treatment liquid delivery tube on which an intake valve is provided, the said second connection means between the root canal and the discharge consist of a conduit, and wherein the said sources comprise a pneumatic circuit having a first low pressure branch entering the said reservoir and a second high pressure branch terminating in a Venturi tube, downstream of which the said conduit debouches and the said discharge is provided.

## DOCUMENTS CONSIDERED TO BE RELEVANT

| Category | Citation of document with indication. where appropriate, of relevant passages | Relevant to claim | CLASSIFICATION OF THE APPLICATION (Int. Cl.4) |
|---|---|---|---|
| X | EP-A-0 127 380 (MICRON CO. LTD.)<br>* Page 12, lines 9-18; page 11, lines 14-26; page 9, lines 16-27; figure 1 * | 1 | A 61 C 5/02<br>A 61 C 17/02 |
| Y | | 2 | |
| | --- | | |
| Y | US-A-4 021 921 (L.J. DETAILLE)<br>* Column 8, lines 8-15; figures 1,4,5 * | 2 | |
| A | | 1 | |
| | --- | | |
| X | US-A-3 871 099 (H. KAHN)<br>* Column 2, lines 47-54; figure 1 * | 1 | |
| | | | **TECHNICAL FIELDS SEARCHED (Int. Cl.4)** |
| | --- | | A 61 C |
| X | US-A-3 164 153 (C. ZORZI)<br>* Column 4, lines 11-23; figure 2 * | 1,2 | |
| | --- | | |
| A | DE-A-3 248 471 (R. KRUPS STIFTUNG)<br>* Claim 1; figures 1,2 * | 1,2 | |
| | ----- | | |

The present search report has been drawn up for all claims

| Place of search | Date of completion of the search | Examiner |
|---|---|---|
| THE HAGUE | 06-08-1986 | RAKOWICZ, J.M. |